# EUROPÄISCHE PATENTSCHRIFT

(11) **EP 2 214 920 B1**
(45) Veröffentlichungstag und Bekanntmachung des Hinweises auf die Patenterteilung: **25.07.2018**
(21) Anmeldenummer: 08841566.6
(22) Anmeldetag: 23.10.2008
(51) Int. Cl.: B60G 17/016, B60G 17/018, B60G 17/019

(54) **VERFAHREN UND SYSTEM ZUR BEEINFLUSSUNG DER BEWEGUNG EINES IN SEINEN BEWEGUNGSABLÄUFEN STEUERBAREN ODER REGELBAREN FAHRZEUGAUFBAUS EINES KRAFTFAHRZEUGES UND FAHRZEUG**
METHOD AND SYSTEM FOR INFLUENCING THE MOVEMENT OF A MOTOR VEHICLE BODY, THE CHAIN OF MOVEMENTS OF WHICH CAN BE CONTROLLED OR ADJUSTED, AND ASSOCIATED VEHICLE
PROCÉDÉ ET SYSTÈME DESTINÉS À INFLUENCER LE MOUVEMENT D'UNE STRUCTURE DE VÉHICULE MOTORISÉ POUVANT ÊTRE COMMANDÉE OU RÉGULÉE DANS SES PROCESSUS DE MOUVEMENT ET VÉHICULE

(30) Priorität: 26.10.2007 DE 102007051224
(43) Veröffentlichungstag der Anmeldung: 11.08.2010
(73) Patentinhaber: Volkswagen Aktiengesellschaft, 38440 Wolfsburg (DE)
(72) Erfinder: ARENZ, Andrea, 38458 Velpke (DE)
(86) Internationale Anmeldenummer: PCT/EP2008/008997
(87) Internationale Veröffentlichungsnummer: WO 2009/053081

(56) Entgegenhaltungen:
- EP-A- 0 672 548
- EP-A- 0 769 396
- EP-A- 1 876 043
- DE-A1- 10 316 114
- DE-A1-102005 013 970
- US-A- 5 235 529
- US-A- 5 452 209
- US-A- 5 488 562
- US-A- 5 510 988
- US-A- 5 533 597
- US-A- 5 550 739
- US-A- 5 864 768
- US-A- 6 058 340
- US-A1- 2002 133 277
- US-A1- 2004 153 226
- US-B1- 6 370 458

## Beschreibung

Die Erfindung betrifft ein Verfahren zur Erzeugung von Signalen zur Beeinflussung der Bewegung eines in seinen Bewegungsabläufen steuerbaren oder regelbaren Fahrzeugaufbaus eines Kraftfahrzeuges, gemäß dem Oberbegriff des Anspruchs 1. Die Erfindung betrifft ferner ein System zur Durchführung des Verfahrens und ein Fahrzeug, insbesondere Kraftfahrzeug, mit einem System zur Beeinflussung der Bewegung eines in seinen Bewegungsabläufen steuerbaren oder regelbaren Ein solches Verfahren und ein solches System sind in US 6058340 A offenbart. Weitere Verfahren und Systeme der gattungsgemäßen Art sind bekannt. So ist beispielsweise aus DE 39 18 735 A1 ein Verfahren und eine Vorrichtung zur Dämpfung von Bewegungsabläufen an Fahrwerken von Personen- und Nutzkraftfahrzeugen bekannt, bei denen aus einer sensorisch ermittelten Bewegung zweier Fahrzeugmassen mittels einer Signalverarbeitungsschaltung ein Steuersignal für einen steuerbaren, an den Fahrzeugmassen angreifenden Aktuator gebildet wird. Für eine komfortable und dennoch sichere Fahrwerkabstimmung ist vorgesehen, die sensorisch ermittelten Signale über eine der Signalverarbeitungsschaltung angehörenden Schaltungsanordnung mit frequenzabhängigem Übertragungsverhalten zu leiten. Hierdurch soll erreicht werden, dass aufgrund der frequenzabhängigen Verarbeitung der Sensorsignale keine statische Kennlinie für die Aktuatorsteuerung beziehungsweise Aktuatorregelung eingesetzt wird, sondern eine von dem Frequenzinhalt des Bewegungsablaufs abhängige Aktuatorsteuerung beziehungsweise Aktuatorregelung erfolgt. Hierdurch soll das Ziel eines möglichst hohen Fahrkomforts bei einer auch in Grenzbereichen des Fahrzustandes sicheren Auslegung des Fahrwerks erzielt werden. Diesem Ansatz liegt der Gedanke zugrunde, dass dem Zielkonflikt zwischen gewünschtem Fahrkomfort, das heißt komfortable und weiche Auslegung, und Fahrdynamik, das heißt sportliche und straffe Abstimmung, einerseits und einer ausreichenden Fahrsicherheit andererseits entsprochen werden soll. Für Fahrkomfort und Fahrdynamik ist eine Dämpfung der Bewegung des Aufbaus entscheidend, während für eine Fahrsicherheit eine Radlast beziehungsweise Radlastschwankung entscheidend ist.

Bekannt sind im Wesentlichen drei Dämpfersysteme für Fahrzeuge, wobei einer Federanordnung zwischen Rad und Aufbau ein Aktuator parallel geschaltet ist. Bekannt sind passive, semi-aktive und aktive Dämpfersysteme. Bei passiven Dämpfersystemen ist eine Veränderung der Dämpferkraft während des Fahrbetriebes nicht vorgesehen. Bei semi-aktiven Dämpfersystemen kann die Dämpferkraft durch eine Veränderung eines Ölfluidstromes unter Verwendung eines oder mehrerer Ventile verändert werden. Auf diese Art und Weise können die Dämpfungseigenschaften verändert werden. Semi-aktive Dämpfersysteme arbeiten rein energieabsorbierend. Bei aktiven Dämpfersystemen kann eine gewünschte Dämpferkraft sowohl dämpfend als auch energieeinbringend in jede Richtung bereitgestellt werden.

Bei den bekannten Verfahren und Systemen zur Beeinflussung der Bewegung des Fahrwerkes ist nachteilig, dass als Ausgangsgröße aus eingesetzten Reglermodulen eine Kraft angefordert wird. Dies hat den Nachteil, dass zusätzlich eine Dämpfergeschwindigkeit als Zusatzgröße benötigt wird, um über eine Kennfeldumrechnung zu der eigentlichen Stellgröße, dem Steuerstrom, zu gelangen. Darüber hinaus kann auch bei einer konstanten Kraftanforderung der Strom sich,in Abhängigkeit von der Dämpfergeschwindigkeit ändern. Da eine Kennfeldumrechnung fehlerbehaftet ist, wird auch die resultierende Dämpferkraft entsprechend unstetig. Gerade im Bereich von niedrigen Dämpfergeschwindigkeiten, die insbesondere häufig bei Querdynamikvorgängen vorliegen, ist dies nachteilig, da hier die größten Nichtlinearitäten und Ungenauigkeiten im Kennfeld vorliegen. Darüber hinaus ist bekannt, dass im Geschwindigkeitsnulldurchgang im Kennfeld der Dämpfer in der Regel weich gestellt wird. Gerade bei Dämpfergeschwindigkeiten, die um null herum pendeln wird dann bei einer konstanten Kraftanforderung ein ständig pendelnder Strom gestellt, der kontraproduktiv für die eigentliche Regelung ist.

Durch Fahrbahnunebenheiten, Wank- und Nick-Vorgänge des Fahrzeugs bei quer- und längsdynamischen Manövern oder aber auch internen Anregungen (Antriebsstrang, Rad-Reifen) werden vertikale Kräfte erzeugt, die zwischen Fahrwerk und Aufbau wirken. Vor allem die resultierenden Kräfte aus Fahrbahnunebenheiten erzeugen vertikale Störgrößen in Bezug auf die Schwingungen des Fahrzeuges. Ziel einer gelungenen Regelung von Fahrwerkbewegungen sind unter anderem geringe Aufbaubeschleunigungen, geringe Wank- und Nick-Bewegungen, geringe dynamische Radlastschwankungen sowie ein Schwingungsverhalten des Fahrzeugs, welches von der Beladung weitgehend unabhängig ist.

Die vertikalen Kräfte bestehen im Wesentlichen aus Feder- und Dämpferkräften, die dafür sorgen, dass der Aufbau relativ zum Fahrwerk abgestützt wird und dass die Bewegungen des Fahrzeuges relativ zur Fahrbahn in Grenzen gehalten werden Zur Untersuchung des schwingenden Verhaltens von Kraftfahrzeugen werden geeignete Ersatzmodelle erstellt, auf weiche die allgemeinen Methoden der Schwingungslehre anwendbar sind. Die Modelle bestehen aus verschiedenen Massen, die gegebenenfalls mit Trägheit behaftet sind und enthalten jeweils Feder- und Dämpferelemente. Aus den Modellen lassen sich so Schwingungsgleichungen, Eigenfrequenzen und Dämpfungsmaße ableiten.

Für die Herleitung eines einfachen, effizienten und gültigen Modells gibt es keine in allgemeingültige Regeln fassbare Vorgehensweise. Das Modell eines mechanischen Systems, dass beispielsweise alle nur denkbaren Bewegungsmöglichkeiten berücksichtigt, ist zwar physikalisch richtig, aber für die praktische Anwendung unübersichtlich, unhandlich und verliert für die meisten Fälle die physikalische Überschaubarkeit. Die Entwickler sind daher bemüht, ein Modell so einfach wie möglich zu gestalten, um es mit technisch und wirtschaftlich vertretbarem Aufwand untersuchen zu können.

Weit verbreitet ist das Modell eines sogenannten Skyhookreglers. Dieser Ansatz geht von der Idee aus, dass der Federungskomfort dann optimal ist, wenn man den schwingenden Aufbau nicht gegenüber der unebenen Straße sondern gegenüber dem Himmel dämpft. In einem Gedankenexperiment wird der Schwingungsdämpfer dazu nicht zwischen Aufbau und Rad sondern zwischen Aufbau und einem mitgeführten Haken am Himmel angeordnet. Im Rahmen dieses Gedankenexperimentes soll dann der reale Dämpfer die gleiche Kraft aufbringen wie der Skyhook-Dämpfer. Verwendet man semi-aktive Dämpfer, also Dämpfer, die zwar passiv aber in ihrer Dämpfungskonstante einstellbar sind, so versucht man die Wirkung des Dämpfers gering zu halten, wenn aufgrund der Kräfte des Rades der Dämpfer in der gleichen Richtung am Aufbau wirksam ist, in der sich der Aufbau gerade bewegt. Hierdurch soll die Bewegung des Aufbaus durch die am Dämpfer herrschende Kraft nicht noch zusätzlich angefacht werden.

Sind umgekehrt die genannten beiden Richtungen gegenläufig, so wird der Dämpfer hart eingestellt, um die Bewegung des Aufbaus abzubremsen. Bei dem Standard-Skyhook-Verfahren erfolgt der Übergang von einer hohen auf eine niedrige Dämpferkraft beziehungsweise niedrige auf eine hohe Dämpferkraft sprunghaft. Aufgrund hoher Kraft-Gradienten in der Dämpferbewegung entstehen auffällige Poltergeräusche, die für die Fahrzeuginsassen sehr unangenehm sind und somit den Fahrkomfort beeinträchtigen.

Das wesentliche Element beim Skyhook-Modell ist hierbei die Ermittlung der Kraft, die für die Beruhigung des Aufbaus erforderlich ist. Zwingend notwendig ist im Weiteren ein Dämpfkraftkennfeld, das unter Berücksichtigung der aktuellen Dämpfergeschwindigkeit aus dieser Kraft einen Sollstrom schätzt. Diese Kennfelder sind jeweils in den Steuergeräten abzulegen, so dass aus geforderter Soll-Kraft und ermittelter Ist-Dämpfergeschwindigkeit zu jedem Zeitpunkt eine Soll-Stromermittlung möglich ist.

Systemimmanent liegen beim Skyhook-Prinzip Zeitverzüge und Nichtlinearitäten vor, die zum Teil durch die nicht berücksichtigte Elastizität des Dämpfers begründet sind und die nicht kompensierbar sind und zu Ungenauigkeiten führen, sowohl in der Phase als auch der Amplitude des Stromverlaufs.

Ferner wird die Kenntnis der relativen Dämpfergeschwindigkeiten an jeder Aktorposition vorausgesetzt, obwohl diese zu einer originären Aufbauregelung nicht benötigt werden, denn der Fahrer ist primär an einer ruhigen Lage des Aufbaus interessiert, während die Bewegung der Räder für ihn in erster Näherung nicht interessant ist. Um die relative Geschwindigkeit des Dämpfers zu erkennen sind vier zusätzliche Sensoren nötig, so dass sich die Zahl der verwendeten Sensoren verdoppelt. Da eine Regelung im Bereich der Radfrequenz erfolgt, wird zusätzlich die Regelgüte dieses Konzepts stark vom Straßenprofil beeinflusst und die Zahl der Umschaltungen des Dämpfers ist vergleichsweise hoch.

Kraftspitzen (durch Änderungen der Dämpfkraft) werden vom Dämpfer in den Aufbau eingeleitet. Ein Skyhook-Regler sollte theoretisch im Nulldurchgang schalten, da dieser aber nie genau getroffen wird (zum Beispiel durch zu ungenaue Messung), wird außerhalb des Nulldurchgangs geschaltet, dadurch entstehen Kraftspitzen. Diese wirken sich zum Einen schädlich auf den Aufbau aus (hinsichtlich Festigkeit), zum Anderen treten Geräuschprobleme auf. Dadurch, dass sich die Relativgeschwindigkeit im Radfrequenzbereich ändert, werden auch Kraftänderungen in diesem Frequenzbereich gefördert.

Das Skyhook-Prinzip minimiert zwar weitgehend die Geschwindigkeit des Aufbaus, hat im Übrigen aber drei wesentliche Nachteile:
a) Es treten Kraftspitzen mit erheblichen Beschleunigungen des Aufbaus auf, die für den Fahrer unangenehm sind. Bei semi-aktiven Dämpfern ergeben sich Kraftsprünge, die für den Fahrer störend wirken.
b) Bei dem Skyhook-Prinzip geht die Radgeschwindigkeit mit einer für den Fahrer unangenehm hohen Radfrequenz einher, obwohl dem Fahrer primär an der Ruhigstellung des Fahrzeugsaufbaus liegt und damit an der Minimierung der Aufbaugeschwindigkeit.
c) Beim Skyhook-Prinzip regelt der Regler eine Kraft als Stellgröße am Ausgang. Diese muss über ein Kennlinienfeld unter Berücksichtigung der Relativgeschwindigkeit vrel des Dämpfers gegenüber dem Aufbau des Fahrzeugs in einen entsprechenden. Strom für den Dämpfer umgerechnet werden.

Der Erfindung liegt daher die Aufgabe zugrunde, ein Verfahren und ein System der gattungsgemäßen Art anzugeben, mittels denen in einfacher und sicherer Weise eine Regelung der Bewegung eines Fahrzeugaufbaus mit elektronisch ansteuerbaren Dämpfern unter Berücksichtigung eines angeforderten Fahrkomfort möglich ist.

Erfindungsgemäß wird diese Aufgabe durch ein Verfahren mit den im Anspruch 1 genannten Merkmalen gelöst. Dadurch, dass mittels des Dämpferreglers aus den Sensorsignalen wenigstens eine Aufbaugeschwindigkeit an wenigstens einem Punkt des Fahrzeugaufbaus ermittelt wird und mittels Regelalgorithmen aus der wenigstens einen Aufbaugeschwindigkeit das wenigstens eine Steuersignal zur Ansteuerung der Aktuatoren ermittelt wird, ist vorteilhaft möglich, ein harmonisches Bewegungsverhalten des Fahrzeugsaufbaus einzustellen.

In der Erfindung ist vorgesehen, dass als das wenigstens eine Steuersignal ein direkt die Aktuatoren beeinflussender Steuerstrom bereitgestellt wird. Hierdurch entfällt einerseits das Erfordernis der Bereitstellung einer Dämpfergeschwindigkeit als Zusatzgröße und andererseits ist die aus dem Stand der Technik bekannte Kennfeldumrechnung zu der eigentlichen Stellgröße nicht mehr erforderlich.

Zusätzlich soll mit dem neuartigen Regelungsverfahren beziehungsweise Regelungssystem ein vollkommen neuer Ansatz für die Art der Regelung angegeben werden. Danach soll im Prinzip für das Fahrzeug eine möglichst geringe aber harmonische Schwingung des Fahrzeugsaufbaus erreicht werden, auch wenn für die zu erreichende Harmonie eine leicht höhere Aufbaugeschwindigkeit in Kauf genommen werden muss. Das neuartige Regelungsverfahren geht von dem Ansatz aus, nicht eine bestimmte physikalische Größe möglichst gering zuhalten sondern ein Regelungsverfahren anzubieten, welches sich primär nach dem Empfinden der Fahrzeuginsassen richtet und versucht dieses möglichst günstig zu beeinflussen. Um eine Regelstrategie anbieten zu können, welche sich primär nach den Kundenbedürfnissen richtet, ist zunächst zu ermitteln, was der Fahrer beziehungsweise die Fahrzeuginsassen möchten. Dabei wurde herausgefunden, dass der Fahrer ein möglichst harmonisches Verhalten des Aufbaus bevorzugt.

Weiterhin wird von den Fahrzeuginsassen gewünscht, keine unnötigen Geräusche zu haben. Bei viel Bewegung sollte das Fahrzeug entsprechend angebunden sein, um ein Gefühl der Sicherheit zu vermitteln. Kleine Anregungen des Fahrzeugsaufbaus dagegen sollen gar nicht bemerkt werden. Insgesamt aber muss sich das Fahrzeug harmonisch bewegen. Dieses menschliche Grundbedürfnis zeigt sich beispielsweise bei folgender Analogie. Die Schwingung einer Hängematte oder Schaukel wird von den Nutzern trotz der vorhandenen Amplitude als sehr angenehm empfunden. Für die vorliegende Anmeldung ist es vorrangig, herauszufinden, was der Fahrer will. Diesem beschriebenen neuen Ansatz des erfindungsgemäßen Regelungsverfahrens wird der aus dem Stand der Technik bekannte Skyhook-Regler nicht gerecht.

Eine Lösung der Aufgabe besteht somit darin, die Eingangsgrößen eines Reglers derart zu wählen, dass sich für den Aufbau eine weitgehend harmonische Bewegung ergibt. Die geforderte Harmonie wird somit nicht durch den speziellen Aufbau des Reglers erreicht sondern durch Wahl geeigneter Eingangsgrößen. Unter harmonisch soll eine möglichst sinusförmige Schwingung mit möglichst geringen Amplituden in der Beschleunigung und im Ruck verstanden werden.

In bevorzugter Ausgestaltung der Erfindung ist vorgesehen, dass als Regeleingangsgröße die wenigstens eine Aufbaugeschwindigkeit derart gewählt wird, dass die Regelung im Aufbaufrequenzbereich erfolgt. Harmonie wird hierbei im Wesentlichen dadurch erreicht, dass im Frequenzbereich des Aufbaus geregelt wird (und zum Beispiel nicht des Rades). Dabei wird berücksichtigt, dass ein harmonisches Verhalten des Fahrzeugaufbaus für den Menschen vorzugsweise im Frequenzbereich des Aufbaus von ungefähr 1 bis 2 Hz besonders wichtig ist.

Ferner ist in bevorzugter Ausgestaltung der Erfindung vorgesehen, dass als Regeleingangsgröße die wenigstens eine Aufbaugeschwindigkeit aus mehreren möglichen Aufbaugeschwindigkeiten ausgesucht wird. Dabei sind als Aufbaugeschwindigkeiten alle vertikalen Bewegungsformen des Aufbaus zu verstehen, wie vertikale Aufbaugeschwindigkeiten an beliebigen Positionen, vertikale Hub-, Wank- und Nickgeschwindigkeiten sowie Wank- und Nickwinkelgeschwindigkeiten. Als Eingangsgröße für die Regelung dienen somit eine oder mehrere Aufbaugeschwindigkeiten, wobei der eine oder die mehreren Messpunkte keine Rolle spielen. Auf die Eingabe der Relativgeschwindigkeit des Dämpfers wird somit bewusst verzichtet, wodurch auch die Geschwindigkeit des Rades in vertikaler Richtung nicht gemessen werden muss. Hierdurch halbiert sich die übliche Anzahl der notwendigen Sensoren. Die Regelung erfolgt weiterhin nicht in Abhängigkeit der Dämpferbewegungsrichtung und die Regelfrequenz liegt somit im Aufbaufrequenzbereich. Die Stellgröße und das daraus resultierende Schwingverhalten sind entsprechend harmonisch.

Da die Relativgeschwindigkeit des Dämpfers bei dem erfindungsgemäßen Regelungsverfahren keine Rolle spielt, wird diese somit auch nicht zur Ermittlung des für die Einstellung des Dämpfers notwendigen Stroms benötigt. Im Übrigen ist das Verfahren der direkten Ausgabe des, dem Soll-Strom eines Stellgliedes entsprechenden, Ausgangssignals geeignet für viele Stellglieder, die durch Strom angesteuert werden, wie beispielsweise Motoren, Magnete und ähnliches. Die Ausgangsgröße der Regelung ist direkt proportional zur Steuergröße des Dämpfers (zum Beispiel Strom) und nicht zu dessen Ausgangsgröße (Dämpfkraft). Die Steuergröße (Strom) dient zum Stellen des Stellgliedes (Proportionalventil). Somit entfällt die Umrechnung von der Dämpfkraft unter Zuhilfenahme der Dämpfergeschwindigkeit über Kennlinienfelder zum Sollstrom. Folglich ist die Kenntnis von Dämpferkraft und Relativgeschwindigkeit des Dämpfers nicht erforderlich. Konsequenterweise werden auch Sensoren und Kennlinien zur Ermittlung dieser Größen nicht benötigt.

Das erfindungsgemäße Verfahren beziehungsweise Regelungssystem sowie die genannten vorteilhaften Weiterbildungen werden mit besonderem Vorteil angewendet, wenn die Aktuatoren von semi-aktiven Dämpfern gebildet sind. Bei dem Skyhook-Verfahren ist nur die Soll-Kraft bekannt, mit welcher der Aktor entgegen der Kraft des Aufbaus wirken soll, um diesen zu beruhigen. Handelt es sich bei dem Aktor um einen semi-aktiven Dämpfer, so muss zusätzlich noch beachtet werden, welches Vorzeichen die Bewegung des Aufbaus und die Relativgeschwindigkeit des Dämpfers zueinander haben. Schließlich muss noch aufgrund der, von dem Regler ermittelten, Soll-Kraft des Dämpfers und der gerade herrschenden Relativgeschwindigkeit des Dämpfers über ein Kennlinienfeld ermittelt werden, welche Stellung das Ventil des Dämpfers haben muss, um die durch den Regler errechnete Soll-Kraft tatsächlich zu erzielen. Um diese Stellung des Ventils zu erhalten ist als Steuergröße ein bestimmter Strom notwendig. Es ist daher ein Kennlinienfeld notwendig, in welchem bestimmten Strömen fest zugeordnete Kennlinien die (bei diesem vorgegebenen Strom gegebene) Abhängigkeit zwischen der Relativgeschwindigkeit des Dämpfers und der Kraft des Dämpfers aufzeigen.

Während des Regelungsvorganges bei der Skyhook-Regelung wird bei bekannter Soll-Kraft des Dämpfers und bekannter Relativgeschwindigkeit des Dämpfers, die einen bestimmten Punkt in einem entsprechenden Koordinatensystem beschreiben, diejenige Strom-Kennlinie gesucht, die durch diesen Punkt geht. Es versteht sich, dass bei einem derartigen Verfahren erhebliche Ungenauigkeiten auftreten können, so dass der Dämpfer möglicherweise nicht zur richtigen Zeit mit der richtigen Kraft eingestellt wird, was zu spürbaren plötzlichen Bewegungen des Aufbaus führt, die von den Fahrzeuginsassen wenn nicht als beängstigend, so doch als störend empfunden werden.

Dadurch, dass bei dem vorliegenden erfindungsgemäßen Verfahren das als Dämpfer dienende Stellglied direkt durch ein dem Ausgangssignal Reglers proportionales Signal angesteuert werden kann, werden die oben beschriebenen Schwierigkeiten in einfacher und kostengünstiger Weise umgangen, da bei dem erfindungsgemäßen Regelungsverfahren der Regler in der Lage ist, aufgrund einer einzigen Kennlinie der an seinem Eingang anliegenden Aufbaugeschwindigkeit einen entsprechenden Stromwert als Ausgangssignal zuzuordnen. Die vertikale Bewegung des Rades wird dabei nur in soweit berücksichtigt, wie sie zu einer hinreichenden Bewegung des Aufbaus geführt hat. Es können also die Ausgangssignale des Reglers unmittelbar die Eingänge der Ventilspule eines Dämpfers ansteuern. Es kann aber auch ein Verstärker vorgesehen sein, welche die Ausgangssignale des Reglers proportional verstärkt.

Mittels des semi-aktiven Dämpfers kann die Härte des Dämpfers über die Zeit des Schwingungsverlaufs des Aufbaus eingestellt werden. Dabei kann zum Einen eine Grundeinstellung vorgenommen werden, bei welcher der Dämpfer generell härter eingestellt wird (sportlich fahren) oder weicher eingestellt wird (komfortabel fahren). Darüber hinaus lässt sich noch der Verlauf der Dämpfung über den Verlauf der Schwingung des Aufbaus einstellen, indem beispielsweise höhere Schwingungen überproportional gedämpft werden. Die genannten Einstellungen lassen sich dadurch erreichen, dass ein entsprechender Strom auf das Proportionalventil des Dämpfers gegeben wird, der den Dämpfer härter oder weicher schaltet. Da eine eindeutige Abhängigkeit zwischen der Geschwindigkeit des Aufbaus und der Härte des Ventils vorgegeben werden kann, hängt das von dem Regler ausgegebene Signal eindeutig von der gemessenen Geschwindigkeit des Aufbaus ab, so dass kein zusätzliches Kennlinienfeld zur Bestimmung des ausgegebenen Stromsignals benötigt wird.

Entsprechendes gilt auch für den Fall, dass der Regler die modalen Geschwindigkeiten regelt, wobei hier allerdings die berechneten modalen Geschwindigkeitswerte auf entsprechende Ströme für die an den Eckpunkten des Aufbaus sitzenden Dämpfer umgerechnet werden müssen.

Das Gesagte lässt sich also wie folgt zusammenfassen: Als Eingangsgröße für die Regelung dient die Aufbaugeschwindigkeit. Hierunter werden alle Geschwindigkeiten des Ausbaus verstanden, wie zum Beispiel die Aufbaueckgeschwindigkeiten (vA_vl, vA_vr, vA_hl, vA_hr) als auch die Modalgeschwindigkeiten oder Modalwinkelgeschwindigkeiten (vNick, vWank, ...).

Die Aufbaugeschwindigkeit wird aus folgenden Gründen als gewünschte Eingangsgröße für die Regelung gewählt:
- der Fahrer sitzt im Aufbau, daher interessiert ihn vor allem die Bewegung des Aufbaus und nicht die des Rades zum Beispiel
- der Dämpfer ist ein geschwindigkeitsproportionales Stellglied; die Aufbaugeschwindigkeit ist Bestandteil der Dämpfergeschwindigkeit (vrel = vA - vR); daher empfiehlt sich besonders eine Geschwindigkeit als Eingangsgröße für den Regler.

Weder die Erfindung selbst noch deren vorteilhafte Weiterbildungen behindern die Anpassung des erfindungsgemäßen Verfahrens an unterschiedliche Zustände des Fahrzeugs. Hierzu kann erfindungsgemäß vorgesehen werden, dass vor den Eingang des Reglers beziehungsweise zwischen dem Modalumrechner und dem Regler ein Korrekturglied geschaltet ist, welches über vom Fahrzeugzustand und/oder Fahrerverhalten abhängige Korrektursignale die Eingangssignale des Reglers beziehungsweise die Ausgangssignale des Modalumrechners korrigiert und die korrigierten Aufbaugeschwindigkeiten beziehungsweise Wank- und Nickgeschwindigkeiten den Eingängen des Reglers zur Verfügung stellt. Die als weitere Eingangsgrößen verwendeten Zustandsgrößen gehen vorteilhafterweise als Faktoren proportional wirkend in das Regelungsverfahren ein und wirken damit quasi verstärkend oder schwächend auf die Ausgangsgröße. Bei viel Aufbaubewegung, beispielsweise bei einer Beladung oder Straßenanregung mit viel Aufbauanteil, sollte der Dämpfer härter eingestellt sein. Bei viel Radanregung (Rückinput in Straße) sollte der Dämpfer eher weniger aber nicht zu weich eingestellt sein, das heißt nicht überdämpfen aber auch nicht unterdämpfen. Entsprechendes gilt bei größerer Querdynamik oder schlechterem Straßenzustand. Dementsprechend kann das Reglerverhalten des erfindungsgemäßen Regelverfahrens korrigiert werden über Zustands-Faktoren, wie zum Beispiel Fahrzustand (Längs-, Querdynamik), Beladungszustand, Straßenzustand und Fahreraktivität (Gas, Bremse, Lenkung, Getriebegang).

Erfindungsgemäß können unterschiedliche Aufbaugeschwindigkeiten wie modale Geschwindigkeiten oder Eckgeschwindigkeiten des Aufbaus die Eingangsgröße des Reglers bilden können. In Weiterbildung der Erfindung kann es sich aber auch empfehlen, dass eine Kombination derartiger Aufbaugeschwindigkeiten die Eingangsgrößen des Reglers bilden. So können beispielsweise die vertikalen Geschwindigkeiten an den Angriffspunkten der Dämpfer am Aufbau sowie Wank- und Nickgeschwindigkeiten zueinander parallel die Eingangsgrößen des Reglers oder zweier paralleler Regler bilden oder entsprechende Regler in Serie geschaltet werden.

Durch Umrechnung mit Hilfe eines sogenannten Modalumrechners ist es möglich, einem Regler als Eingangssignale in Form von Drehwinkel-Nick-Geschwindigkeit und Wank-Geschwindigkeit zuzuführen, obwohl die Sensoren nur vertikale Aufbaugeschwindigkeiten messen. Als weitere Eingangsgröße für den Regler dient dann der innerhalb oder außerhalb des Schwerpunktes des Aufbaus berechnete Hub. Die modale Regelung zielt auf die Beruhigung des Aufbaus im Schwerpunkt ab und weniger auf die Beruhigung der einzelnen Ecken des Aufbaus. Da die Fahrgäste, und insbesondere der Fahrer, sich in der Umgebung des Schwerpunktes des Fahrzeugaufbaus befinden, wird durch diese Art der Regelung für die Fahrgäste, und insbesondere den Fahrer, ein erhöhter Komfort erreicht.

Die Aufgabe wird ferner durch ein System mit den im Anspruch 12 genannten Merkmalen gelöst. Bei einem Regelungssystem zur Durchführung des erfindungsgemäßen Verfahrens empfiehlt es sich besonders, die Eingangssignale des Reglers aus Ausgangssignalen von Sensoren abzuleiten, wobei die Sensoren vorteilhaft örtlich im Bereich der Dämpfer angeordnet sind und die Ausgangssignale der Sensoren der Aufbaugeschwindigkeit im Bereich der Sensoren des Fahrzeugs entsprechen. Da hier die Lage der messenden Sensoren unmittelbar neben den Stellgliedern ist, werden Umrechnungsfehler weitgehend vermieden, welche sich ergeben können, wenn die messenden Sensoren weit von den Stellgliedern entfernt angeordnet sind. Bei den Sensoren selbst kann es sich um die Beschleunigung des Aufbaus messende Sensoren handeln, deren Messwerte durch Integration auf die Aufbaugeschwindigkeit umgerechnet werden.

Erfindungsgemäß können bei dem erfindungsgemäßen Regelungssystem, sowohl die Eingangsgrößen als auch die Ausgangsgrößen des Reglers durch geeignete Zusatzgrößen korrigiert werden. So können beispielsweise die Eingangsgrößen mittels einer oder mehrerer geeigneter Zusatzgrößen proportional verstärkt oder abgeschwächt werden. Entsprechendes ist auch hinsichtlich der Ausgangsgrößen möglich. In Bezug auf die Ausgangsgrößen kann aber auch eine Zusatzgröße nur hinzugefügt oder abgezogen werden, so dass ein entsprechendes Offset gebildet wird.

Weitere bevorzugte Ausgestaltungen ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch ein Kraftfahrzeug mit einer Dämpferregelung;
- Figur 2: eine Prinzipskizze eines Kraftfahrzeuges mit vertikalen Eck-Aufbaugeschwindigkeiten;
- Figur 3: eine Prinzipskizze eines Kraftfahrzeuges mit vertikalen Modal-Aufbaugeschwindigkeiten;
- Figur 4: ein Blockschaltbild eines Standardregelkreises;
- Figur 5: ein Blockschaltbild eines erweiterten Regelkreises;
- Figur 6: ein Blockschaltbild eines Reglers mit Skyhook-Regler und Kennfeld (Stand der Technik);
- Figur 7: ein Blockschaltbild eines Reglers mit aufbaugeschwindigkeitsabhängiger Regelung;
- Figur 8: ein Blockschaltbild eines Reglers mit Einzelradregler und
- Figur 9: ein Blockschaltbild eines Reglers mit Modalregler.

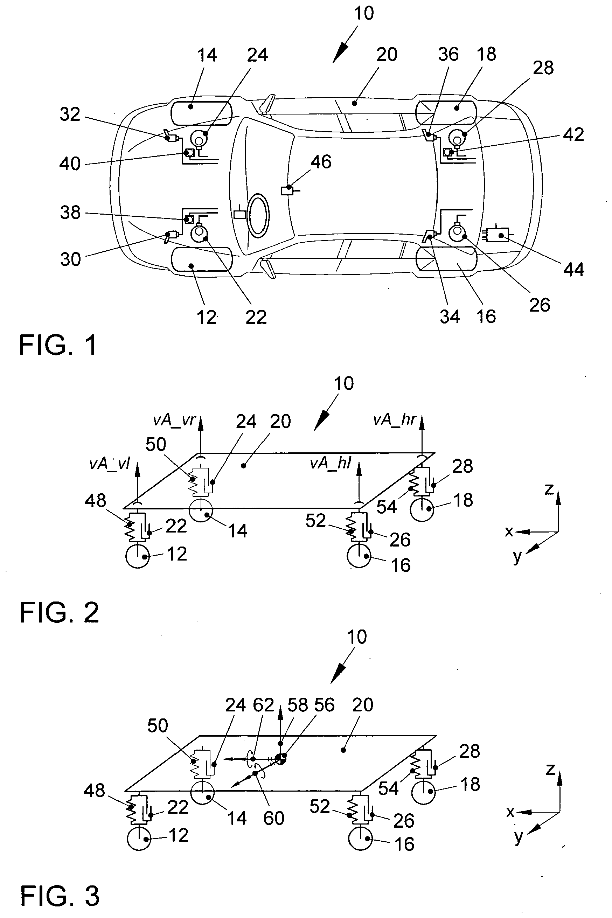

Figur 1 zeigt schematisch in Draufsicht ein insgesamt mit 10 bezeichnetes Kraftfahrzeug. Aufbau und Funktion von Kraftfahrzeugen sind allgemein bekannt, so dass im Rahmen der vorliegenden Beschreibung hierauf nicht näher eingegangen wird.

Das Kraftfahrzeug 10 besitzt vier Räder 12, 14, 16 und 18. Die Räder 12, 14, 16 und 18 sind über eine bekannte Radaufhängung an einem Aufbau 20 des Kraftfahrzeuges 10 befestigt. Unter Aufbau 20 wird im Rahmen der Erfindung allgemein die Fahrzeugkarosserie mit der Fahrgastzelle verstanden. Zwischen den Rädern 12, 14, 16 und 18 einerseits und dem Aufbau 20 ist jeweils ein Dämpfer 22, 24, 26 beziehungsweise 28 angeordnet. Die Dämpfer 22, 24, 26 und 28 sind parallel zu nicht dargestellten Federn angeordnet. Die Dämpfer 22, 24, 26 und 28 sind beispielsweise als semi-aktive Dämpfer ausgebildet, das heißt durch Anlegen eines Steuersignals an ein Stellmittel der Dämpfer kann die Dämpferkraft variiert werden. Das Stellmittel ist üblicher Weise als elektromagnetisches Ventil ausgebildet, so dass das Stellsignal ein Steuerstrom für das Ventil ist.

Jedem Rad beziehungsweise jedem Dämpfer ist ein Wegsensor 30, 32, 34 beziehungsweise 36 zugeordnet. Die Wegsensoren sind als Relativwegsensoren ausgebildet, das heißt diese messen eine Veränderung des Abstandes des Aufbaus 20 von dem jeweiligen Rad 12, 14, 16 beziehungsweise 18. Typischerweise werden hier sogenannte Drehwinkel-Wegsensoren eingesetzt, deren Aufbau und Funktion allgemein bekannt sind.

Der Aufbau 20 umfasst ferner drei an definierten Punkten angeordnete Vertikalbeschleunigungssensoren 38, 40 und 42. Diese Beschleunigungssensoren 38, 40 und 42 sind fest an dem Aufbau 20 angeordnet und messen die Vertikalbeschleunigung des Aufbaus im Bereich der Räder 12, 14 beziehungsweise 18. Im Bereich des linken hinteren Rades 16 kann die Beschleunigung aus den drei anderen Beschleunigungssensoren rechnerisch ermittelt werden, so dass hier auf die Anordnung eines eigenen Beschleunigungssensors verzichtet werden kann.

Die Anordnung der Sensoren ist hier lediglich beispielhaft. Es können auch andere Sensoranordnungen, beispielsweise ein vertikaler Aufbaubeschleunigungssensor und zwei Drehwinkelsensoren oder dergleichen, zum Einsatz kommen.

Das Kraftfahrzeug 10 umfasst ferner ein Steuergerät 44, das über Signal- beziehungsweise Steuerleitungen mit den Stellmitteln der Dämpfer 22, 24, 26 und 28, den Wegsensoren 30, 32, 34 und 36 und den Beschleunigungssensoren 38, 40 und 42 verbunden ist. Das Steuergerät 44 übernimmt die nachfolgend noch näher zu erläuternde Dämpferregelung. Daneben kann das Steuergerät 44 selbstverständlich auch weitere, hier nicht zu betrachtende Funktionen innerhalb des Kraftfahrzeuges 10 übernehmen. Das Kraftfahrzeug 10 umfasst ferner ein Schaltmittel 46, beispielsweise einen Taster, ein Drehrad oder dergleichen, mittels dem von einem Fahrzeugführer eine Anforderung an die Bewegung des Aufbaus 20 gewählt werden kann. Hier kann beispielsweise zwischen der Anforderung "Komfort", der Anforderung "Sport" und der Anforderung "Basis" gewählt werden. Die Wahl ist entweder stufenförmig zwischen den drei Modi oder stufenlos mit entsprechenden Zwischenmodi möglich.

Das Schaltmittel 46 ist ebenfalls mit dem Steuergerät 44 verbunden.

Figur 2 zeigt eine Prinzipskizze des Kraftfahrzeuges 10, wobei hier der Aufbau 20 als ebene Fläche angedeutet ist. An den Ecken des Aufbaus 20 sind jeweils die Räder 12, 14, 16 und 18 über eine Feder-Dämpfer-Kombination in an sich bekannter Art und Weise angeordnet. Die Feder-Dämpfer-Kombination besteht aus den Dämpfern 22, 24, 26 und 28 und jeweils parallel geschalteten Federn 48, 50, 52 und 54. An den Ecken des Aufbaus 20 sind die in Figur 1 dargestellten Beschleunigungssensoren 38, 40 beziehungsweise 42 angeordnet, mittels denen die vertikale Geschwindigkeit an den Ecken des Aufbaus 20 bestimmt werden kann. Hierbei handelt es sich um die Geschwindigkeiten vA_vl (Geschwindigkeit Aufbau vorne links), vA_vr (Geschwindigkeit Aufbau vorne rechts), vA_hl (Geschwindigkeit Aufbau hinten links) und vA_hr (Geschwindigkeit Aufbau hinten rechts). Die Geschwindigkeit kann aus den mittels der Beschleunigungssensoren gemessenen Beschleunigungen durch Integration errechnet werden.

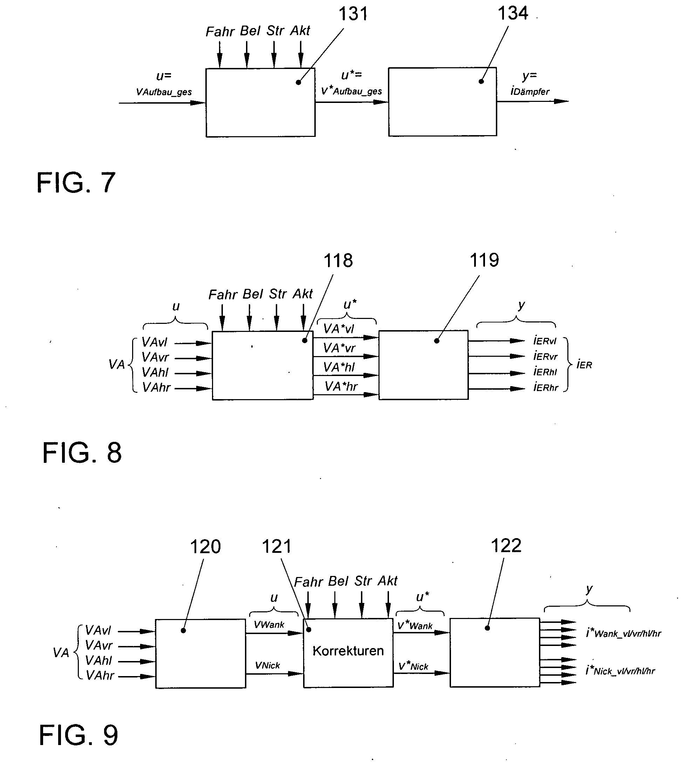

Bei dem im Zusammenhang mit Figur 7 beschriebenen erfindungsgemäßen Lösungsansatz wird nun die an sich bekannte Skyhook-Regelung derart abgewandelt, dass die vertikale Geschwindigkeit der Räder gegenüber dem Aufbau vernachlässigt wird und so gerechnet wird, als ob die Räder sich auf einer glatten Ebene bewegen. Damit wird die, die Kraft bestimmende, Geschwindigkeit der Dämpfer gleich der Geschwindigkeit an den entsprechenden Ecken des Aufbaus und es wird nur auf die Geschwindigkeit an den Ecken geregelt. Die Vorteile dieses Prinzips wurden schon ausführlich erörtert. Einzelheiten hierzu werden noch im Zusammenhang mit Figur 7 genannt. Vorteile dieser Regelungsart bestehen auch darin, dass die Ecken des Fahrzeugs sehr schnell ruhig gestellt werden.

Figur 3 zeigt wiederum die Prinzipskizze des Kraftfahrzeuges 10, wobei gleiche Teile wie in den vorhergehenden Figuren mit gleichen Bezugszeichen versehen und nicht nochmals erläutert sind. In einem Schwerpunkt 56 sind die Modalbewegungen des Aufbaus 20 verdeutlicht. Dies ist einerseits ein Hub 58 in vertikaler Richtung (z-Richtung), ein Nicken 61, das heißt eine Drehbewegung um eine in der y-Achse.liegende Querachse, und ein Wanken 63, das heißt eine Drehbewegung um eine in der x-Achse liegende Längsachse des Kraftfahrzeuges 10.

Die in dem Koordinatensystem x, y, z zu regelnden Nick-Geschwindigkeiten sind diesmal allerdings nicht die Geschwindigkeiten an den Ecken des Aufbaus 20 sondern Dreh-Winkelgeschwindigkeiten im Schwerpunkt 56 des Aufbaus 20. Die Regelung ist im Prinzip daher so ausgelegt, dass die Winkelgeschwindigkeiten hinsichtlich Wanken und Nicken sowie zusätzlich noch die vertikale Geschwindigkeit des Hubes minimiert werden. Der Vorteil dieser Art der Regelung besteht darin, dass die Personen im Fahrzeug ungefähr im Bereich des Schwerpunktes 56 sitzen und, da auf die Ruhigstellung dieses Bereiches geregelt wird, einen etwas größeren Fahrkomfort erfahren als bei einer Regelung über die Ecken des Aufbaus. Dies gilt besonders, wenn im Schwerpunkt des Fahrzeugs angeordnete, entsprechende Sensoren vorgesehen sind, welche die Wank-Geschwindigkeit, die Nick-Geschwindigkeit und die Hub-Geschwindigkeit direkt messen. Sind keine Sensoren im Schwerpunkt angeordnet, können die Modalbewegungen über entsprechende Transformationen aus den Signalen der gegebenen Sensoren gewonnen werden.

Nimmt man nun an, dass bei der Regefung gemäß Figur 3 ebenfalls auf die Berücksichtigung der vertikalen Geschwindigkeit der Räder 12, 14, 16, 18 verzichtet wird und die zur Messung der genannten Winkelgeschwindigkeiten und des Hubes dienenden Sensoren wie in Figur 3 an den Ecken des Fahrzeugs angeordnete sind, so müssen aus den gemäß Figur 3 gemessenen Geschwindigkeiten an den Ecken des Aufbaus 20 die genannten Winkelgeschwindigkeiten und der Hub im Schwerpunkt 56 berechnet werden. Man kommt dann zu einer Regeleinrichtung, wie sie in Figur 9 dargestellt und im Zusammenhang mit dieser Figur näher erläutert wird.

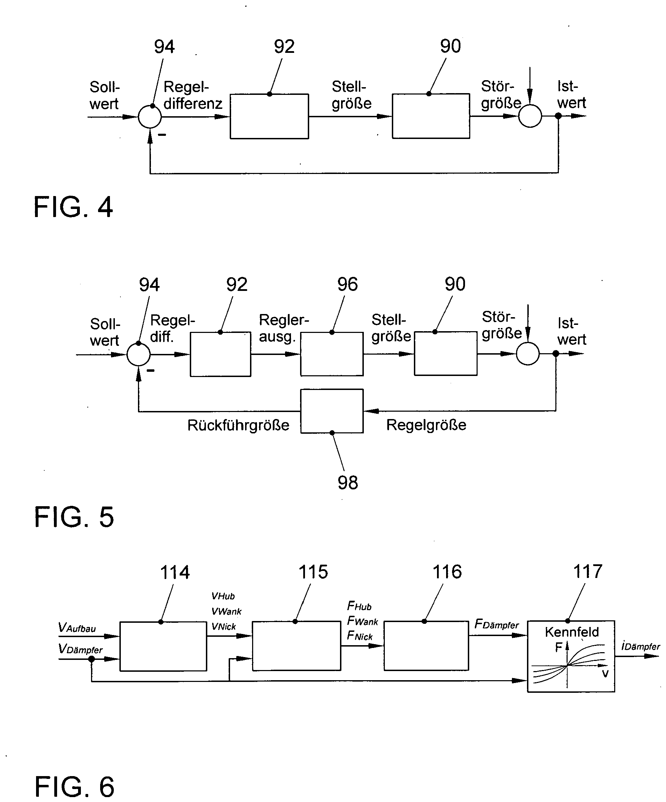

In Figur 4 ist ein Standardregelkreis dargestellt. Dieser besteht aus einer Strecke 90, einem Regler 92 und einer negativen Rückkopplung der Regelgröße, das heißt des Istwertes auf dem Regler 92. Die Regeldifferenz wird aus der Differenz zwischen Sollwert (Führungsgröße) und Regelgröße berechnet. Die Stellgröße wirkt auf die Strecke 90 und damit auf die Regelgröße. Die Störgröße bewirkt eine, normalerweise unerwünschte, Veränderung der Regelgröße, die kompensiert werden muss. Die Eingangsgröße des Reglers 92 ist die Differenz aus dem gemessenen Istwert der Regelgröße und dem Sollwert. Der Sollwert wird auch als Führungsgröße bezeichnet, dessen Wert durch den gemessenen Istwert nachgebildet werden soll. Da der Istwert durch Störgrößen verändert werden kann, muss der Istwert dem Sollwert nachgeführt werden. Eine in einem Vergleicher 94 festgestellte Abweichung des Istwertes von dem Sollwert, die sogenannte Regeldifferenz, dient als Eingangsgröße für den Regler 92. Durch den Regler 92 wird festgelegt, wie das Regelungssystem auf die festgestellten Abweichungen reagiert, beispielsweise schnell, träge, proportional, integrierend oder dergleichen. Als Ausgangsgröße des Reglers 92 ergibt sich eine Stellgröße, welche auf eine Regelstrecke 90 Einfluss nimmt. Die Regelung dient hauptsächlich zur Beseitigung von Störgrößen, um diese auszuregeln.

In Figur 5 ist eine detailliertere Darstellung des Regelkreises gemäß Figur 4 dargestellt. Es ist ein erweiterter Regelkreis mit den zusätzlichen Elementen Stellglied 96 und Messglied 98 gezeigt. Im Beispiel der erfindungsgemäßen Dämpferregelung setzt sich die Stelleinrichtung beziehungsweise das Stellglied 96 aus einer elektronischen Komponente und einer elektro-hydraulischen Komponente zusammen. Die elektronische Komponente entspricht dem Stromregler im Steuergerät 44, während die elektro-hydraulische Komponente dem elektrisch ansteuerbaren Ventil der Dämpfer 22, 24, 26 beziehungsweise 28 entspricht. In den nachfolgenden Ausführungen sollen diese jedoch nicht weiter betrachtet werden. Diese werden als ideal angenommen beziehungsweise ihr Einfluss wird vernachlässigt. Somit stimmt idealisiert der Reglerausgang, der die Steuergröße liefert, mit der Stellgröße überein oder ist zu dieser zumindest proportional. Der Regler 92 gemäß Figur 4 ist hierbei aufgeteilt in den eigentlichen Regler 92 und das Stellglied 96. Der Regler 92 dient dazu, eine Größe zu bestimmen, mit der auf eine durch den Vergleicher 94 festgestellte Regeldifferenz über das Stellglied 96 reagiert werden soll. Das Stellglied 96 liefert die notwendige Energie in der geeigneten physikalischen Form, um auf den Prozess beziehungsweise die Regelstrecke einzuwirken. In dem Messglied 98 wird der Istwert gemessen. Die Störgröße kann bei einer Regelung der Bewegung eines Fahrzeugaufbaus 20 in Unebenheiten der Fahrbahn, seitlich wirkenden Kräften, wie beispielsweise Wind oder dergleichen, oder ähnlichen Einflüssen begründet sein.

In Figur 6 ist ein Korrekturglied 114 gezeigt, dessen Eingängen die Aufbaugeschwindigkeit vAufbau eines Aufbaus eines Fahrzeugs und die Relativgeschwindigkeit vDämpfer eines Dämpfers zugeführt sind, wobei, wie auch bei den vorangegangenen Beschreibungen, vAufbau und vDämpfer stellvertretend für jeweils vier Eingangssignale stehen, die vorzugsweise in der Nähe der an dem Aufbau angreifenden Dämpfer durch Sensoren gemessen wurden, beziehungsweise zum Teil errechnet wurden. Die Eingangsgrößen vAufbau und vDämpfer werden gegebenenfalls durch das Korrekturglied 114 korrigiert, umgerechnet oder in anderer Weise an den augenblicklichen Zustand des Fahrzeugs angepasst. Im Ergebnis werden von dem Korrekturglied 114 an dessen Ausgängen die korrigierten Geschwindigkeitswerte an die Eingänge eines Skyhook-Reglers 115 abgegeben.

Der Skyhook-Regler 115 berechnet die jeweils von den betreffenden Dämpfern aufzubringende Soll-Kraft F, die von den Dämpfern gegen die Trägheitskraft des sich bewegenden Aufbaus gestellt werden muss, um diesen zu beruhigen. Die von den Dämpfern in Form eines Widerstandes aufbringbare Kraft hängt von der augenblicklichen Relativgeschwindigkeit des Dämpfers ab. Es muss also aufgrund der bekannten Relativgeschwindigkeit vDämpfer und der berechneten Soll-Kraft Fhub, Fwank, FNick der Wert für einen Strom gefunden werden, der den betreffenden Dämpfer derart eingestellt, dass er bei der gegebenen Relativgeschwindigkeit die gewünschte Soll-Kraft zur Verfügung stellt. Dies geschieht mit Hilfe des Kennlinienfeldes 117, an dessen Ausgang dann eine, dem gewünschten Soll-Strom entsprechende Ausgangsgröße iDämpfer zur Verfügung steht.

Soweit es sich bei den Dämpfern um semi-aktive Dämpfer handelt, die nur passiv durch die Bewegung ihres Kolbens in dem Zylinder des Dämpfers Kraft aufbringen können, muss noch durch den Skyhook-Regler 115 dafür Sorge getragen werden, dass durch die von dem Dämpfer ausgeübte Kraft die Bewegung des Aufbaus nicht noch zusätzlich angefacht wird, was dann geschehen kann, wenn das Rad sich schneller als der Aufbau in die gleiche Richtung bewegt. Durch den Skyhook-Regler 115 muss also auch noch das Vorzeichen der Relativgeschwindigkeit des Dämpfers mit dem Vorzeichen der Aufbaubewegung verglichen werden, um entscheiden zu können, ob der Dämpfer hart eingestellt werden soll um Dämpfungskraft zu erzeugen oder möglichst weich eingestellt werden soll, um die Bewegung des Aufbaus nicht noch anzufachen.

Wie beschrieben zeigt Figur 6 ein Blockschaltbild einer bekannten Skyhook-Regelung, bei der auf die Nick- und Wank-Geschwindigkeiten sowie die Hubgeschwindigkeit des Aufbaus geregelt wird. Ähnlich wie bei dem Modal-Umrechner (Figur 9) rechnet in Figur 6 der Modal-Umrechner 114 die vertikal gerichteten Geschwindigkeitssignale an seinem Eingang in die Hub-Geschwindigkeit vHub und die Winkelgeschwindigkeiten vWank und vNick um. Im Unterschied zu Figur 9 wird aber bei dem bekannten Regelsystem nach Figur 6 nicht nur die Aufbaugeschwindigkeit vAufbau sondern zusätzlich noch die Relativgeschwindigkeit des Dämpfers vDämpfer in den Modal-Umrechner 114 eingegeben. Die Relativgeschwindigkeit des Dämpfers beschreibt die Geschwindigkeit des Kolbens im Dämpfer also die Geschwindigkeit zwischen Aufbau und Rad. Durch Berücksichtigung dieser Geschwindigkeit wird eine sehr schnelle Ruhigstellung des Aufbaus erreicht. Andererseits ergibt sich durch dieses Verfahren eine größere Anzahl von Nachteilen, die oben im Zusammenhang mit der Skyhook Regelung schon erörtert wurde. In dem Modal-Umrechner 114 können weiterhin noch eine Reihe von Korrekturen vorgenommen werden, wie sie im Zusammenhang mit den Figuren 8 und 9 noch erläutert werden.

Der Skyhook-Regler 115 setzt die modalen Geschwindigkeiten an seinem Eingang in Ausgangssignale um, welche proportional zu den benötigten Kräften sind, um über die von den Dämpfern ausgeübten Kräfte FHub, FWank, FNick den Aufbau ruhig zu stellen. Durch die Berücksichtigung der Relativgeschwindigkeit vDämpfer kann auch die Bewegung des Rades zur Beruhigung des Aufbaus beitragen, soweit diese Bewegung der Bewegung des Aufbaus entgegengesetzt oder zumindest langsamer als diese ist. Soweit, wie im vorliegenden Fall angenommen, die Dämpfer nicht im Schwerpunkt des Fahrzeugs sondern an den Ecken des Aufbaus 20 angeordnet sind, müssen durch einen Umrechner 116 noch die Kräfte FHub, FWank, Nick auf die von den Dämpfern an den Aufbauecken aufzubringenden Kräfte FDämpfer umgerechnet werden. Sind diese Kräfte schließlich berechnet, so muss aufgrund dieser Kräfte vDämpfer und der aktuellen Relativgeschwindigkeit vDämpfer der betreffenden Dämpfer über ein Kennlinienfeld 117 festgelegt werden, mit welchem auf die Dämpfer einwirkenden Steuerstrom die erwünschte Kraft zur Ruhigstellung des Aufbaus erzeugt werden kann. Als Ausgangssignal des Kennlinienfeldes 117 erhält man schließlich die Ströme iDämpfer, mit denen die Dämpfer an den Ecken des Aufbaus beaufschlagt werden müssen.

Um die genannten Schwierigkeiten zu umgehen, schlägt das erfindungsgemäße Regelungsverfahren einen neuen Lösungsansatz vor, der in Figur 7 skizziert ist. Danach wird dem Korrekturglied 131 nur ein der Aufbaugeschwindigkeit vA entsprechendes Signal zugeführt, welches durch - wie bereits erläutert - Zustandsgrößen korrigiert wird. Diese Zustandsgrößen wirken nur proportional verstärkend oder abschwächend und können beispielsweise den augenblicklichen Wert Fahr der Längsdynamik LD, Querdynamik QD, Beladung Bel, den Straßenzustand Str oder den Einfluss des Fahrers (Gas, Bremse, Lenkung, Getriebegang) betreffen. Das Aufbaugeschwindigkeitssignal VA kann wahlweise der Geschwindigkeit der vier Ecken (vorne links, vorne rechts, hinten links, hinten rechts) oder der Hub-, Nick- oder Wankgeschwindigkeit entsprechen.

Dementsprechend wird ein korrigierter Wert der Aufbaugeschwindigkeit vA* dem Regler 134 zugeführt, welcher mittels einer einzigen Kennlinie aufgrund von vA* ein Ausgangssignal i ausgibt, welches zu dem gesuchten Steuerstrom proportional ist, mit dem der betreffende Dämpfer angesteuert werden muss, um die Aufbaugeschwindigkeiten herunter zu regeln.

Der Dämpfer dämpft dabei in beiden Bewegungsrichtungen des Aufbaus und nimmt in erster Näherung keine Rücksicht auf die Bewegung des Rades. Dabei wird in Kauf genommen, dass unter Umständen durch die Bewegung des Rades nicht sofort gegen Null geregelt werden kann. Wegen der erheblich kleineren Masse des Rades gegenüber dem Gewicht des Aufbaus, ergibt sich aber nur ein geringfügig höheres und zudem noch harmonisches Durchschwingen des Aufbaus, welches von den Fahrzeuginsassen als angenehm gegenüber den ruckartigen Bewegungen bei der reinen Skyhook-Regelung empfunden wird.

Figur 8 zeigt mehr ins Einzelne gehend eine weitere Regeleinrichtung gemäß einem ersten Lösungsansatz. Der hierzu notwendige Aufbau ist vergleichsweise einfach und erzielt eine für den Fahrer des Fahrzeugs recht angenehm harmonisch ausklingende Regelung, die frei von den, bei der reinen Skyhook-Regelung üblichen, Schlägen und Geräuschen ist. Wie im Zusammenhang mit Figur 2 beschrieben, befinden sich die Sensoren an den Aufbauecken in unmittelbarer Nähe der Stellen, an denen die Dämpfer an den Aufbau angebunden sind. Im einfachsten Fall könnten die so festgestellten vertikalen Aufbaugeschwindigkeiten vAvl, vAvr, vAhl, vAhr direkt den Eingängen des Einzelrad-Reglers 119 zugeführt werden, wobei in den zuletzt genannten Bezugszeichen v für Geschwindigkeit, A für Aufbau, v für vorn, I für links, r für rechts, h für hinten und vA für die Gruppe der getrennt ankommenden Geschwindigkeitssignale des Aufbaus steht. Um die Regelung an den Fahrzustand des Fahrzeugs (Längs-/Querdynamik) Fahr, den Beladungszustand Bel, den Straßenzustand Str oder die Fahreraktivität (Gas, Bremse, Lenkung, Getriebegang) Akt anzupassen ist ein Korrekturglied 118 dem Einzelrad-Regler 119 vorgeschaltet. In Abhängigkeit von den genannten Parametern oder anderen geeigneten Parametern werden somit die Eingangsgrößen des Korrekturgliedes 118 auf die Geschwindigkeiten vA* hinten korrigiert, also zu vA*vl, vA*vr, vA*hl, vA*hr. Die zuletzt genannten Eingangsgrößen werden von dem Einzelrad-Regler 119 direkt in Ströme umgesetzt, mit denen die an den Aufbauecken befindlichen Dämpfer angesteuert werden können. Da eine Kennlinie besteht, mit der die korrigierten Geschwindigkeiten vA*vl, vA*vr, vA*hl, vA*hr in die entsprechenden Steuerströme iERvl, iERvr, iERhl, iERhr umgesetzt werden können, ist zum Auffinden der benötigte Ströme kein Kennlinienfeld (wie im Zusammenhang mit Figur 6) notwendig. Bei den Bezugszeichen für die Signale am Ausgang des Einzelrad-Reglers 119 stehen i für Strom, ER für Einzelrad, v für vorn, r für rechts, h für hinten, I für links.

Figur 9 zeigt eine Regeleinrichtung gemäß einem zweiten Lösungsansatz. Der hierzu notwendige Aufbau ist vergleichsweise einfach und erzielt eine für den Fahrer des Fahrzeugs recht angenehme, harmonisch ausklingende Regelung, die frei von den, bei der reinen Skyhook-Regelung üblichen, Schlägen und Geräuschen ist. Das Prinzip dieses Lösungsansatzes entspricht dem in Figur 3 dargestellten Aufbau. Die Umrechnung der Aufbaugeschwindigkeiten vAvl, vAvr, vAhl, vAhr in dem Modalumrechner 120 entspricht weitgehend der Arbeitsweise des Modalumrechners 114 in Figur 6, mit dem Unterschied, dass bei dem zweiten Lösungsansatz analog zu dem ersten Lösungsansatz nach Figur 8 auf die Bewertung der Relativgeschwindigkeit vDämpfer der Dämpfer 22, 24, 26, 28 verzichtete wurde und dass kein Ausgangssignal vHub von dem Modalumrechner 120 ausgegeben wird. Ansonsten gilt analog das für den Modalumrechner 114 in Figur 6 Gesagte.

Das Korrekturglied 121 arbeitet im Prinzip wie das Korrekturglied 118 gemäß Figur 8, nur dass durch das Korrekturglied 121 andere Eingangsgrößen (vWank, vNick) bearbeitet und schließlich als korrigierte Ausgangssignale (v*Wank, v*Nick) ausgegeben werden.

Der sich anschließende Modal-Regler 122 entspricht in seiner Bedeutung dem Einzelrad-Regler 119 in Figur 8, mit dem Unterschied dass er andere Eingangsgrößen aufnimmt und andere Ströme ausgibt. Die Eingangsgrößen werden durch die Winkelgeschwindigkeiten v*Wank, v*Nick gebildet, während die Ausgangssignale Steuerströme für die Dämpfer sind, wobei die Steuerströme iWank_vl/vr/hl/hr, iNick_vl/vr/hl/hr bereits auf die Lage der Dämpfer an den Aufbauecken umgerechnet wurden. Bei den Bezugszeichen steht wiederum v für vorn, r für rechts, h für hinten, I für links und i für Strom.

Die Erfindung betrifft also ein Verfahren oder Regelungssystem zur Regelung von durch Stellgrößen y verstellbaren Aktoren, insbesondere von durch elektrischen Strom iERvl, iERvr, iERhl, iERhr;iWank_vl/vr/hl/hr, iNick_vl/vr/hl/hr ansteuerbaren Dämpfern eines sich bewegenden Körpers beziehungsweise Fahrzeugs 10 mittels eines Reglers 119, 122, 134 der Eingangsgrößen u (beispielhaft vAvl/vr/hl/hr, v*Wank, v*Nick) aufnimmt und Ausgangsgrößen y (beispielhaft i, iERvl/vr/hl/hr, iWankvl/vr/hl/hr, iNickvl/vr/hl/hr) abgibt, wobei die Eingangsgrößen u/u* (beispielhaft vAvl/vr/hl/hr, v*Wank, v*Nick) des Reglers 119, 122, 134 derart gewählt sind, dass sich für den Aufbau 20 eine weitgehend harmonische Bewegung ergibt.

### Bezugszeichenliste

- 10: Kraftfahrzeug
- 12: Rad
- 14: Rad
- 16: Rad
- 18: Rad
- 20: Aufbau
- 22: Dämpfer
- 24: Dämpfer
- 26: Dämpfer
- 28: Dämpfer
- 30: Wegsensor
- 32: Wegsensor
- 34: Wegsensor
- 36: Wegsensor
- 38: Beschleunigungssensoren
- 40: Beschleunigungssensoren
- 42: Beschleunigungssensoren
- 44: Steuergerät
- 46: Schaltmittel
- 48: Feder
- 50: Feder
- 52: Feder
- 54: Feder
- 56: Schwerpunkt
- 58: Hub
- 90: Strecke
- 92: Regler
- 94: Vergleicher
- 96: Stellglied
- 98: Messglied
- 114: Korrekturglied
- 115: Skyhook-Regler
- 116: Umrechner
- 117: Kennlinienfeld
- 118: Korrekturglied
- 119: Einzelrad-Regler
- 120: Modalumrechner
- 121: Korrekturglied
- 122: Modal-Regler
- 131: Korrekturglied
- 134: Regler

## Patentansprüche

1. Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale werden einem Dämpferregler (119, 122, 134) zugeführt und der Dämpferregler wenigstens ein Steuersignal zur Ansteuerung von Aktuatoren (22, 24, 26, 28), insbesondere semi-aktiven oder aktiven Dämpfern, liefert, mittels denen die Bewegung des Fahrzeugaufbaus beeinflusst werden kann, wobei mittels des Dämpferreglers aus den Sensorsignalen als Eingangsgröße für eine Regelung (Regeleingangsgröße) wenigstens eine Aufbaugeschwindigkeit an wenigstens einem Punkt des Fahrzeugaufbaus ermittelt wird und mittels Regelalgorithmen aus der wenigstens einen Aufbaugeschwindigkeit das wenigstens eine Steuersignal zur Ansteuerung der Aktuatoren ermittelt wird, wobei als das wenigstens eine Steuersignal ein direkt die Aktuatoren beeinflussender Steuerstrom bereitgestellt wird, **dadurch gekennzeichnet, dass** als weitere Eingangsgrößen Fahrzustand (Längs- und Querdynamik), Beladungszustand, Straßenzustand und Fahreraktivität (Gas, Bremse, Lenkung, Schaltstufe) zur Korrektur der wenigstens einen Aufbaugeschwindigkeit verwendet werden.

2. Verfahren nach Anspruch 1, **dadurch gekennzeichnet, dass** diese weiteren Eingangsgrößen als Korrekturen der Eingangsgrößen dienen, in Form von Multiplikatoren oder dergleichen.

3. Verfahren nach einem der vorhergehenden Ansprüche, **dadurch gekennzeichnet, dass** die weiteren Eingangsgrößen als Korrekturen einer oder mehrerer Aufbaugeschwindigkeiten dienen.

4. Verfahren nach einem der vorhergehenden Ansprüche, **dadurch gekennzeichnet, dass** als Regeleingangsgröße die wenigstens eine Aufbaugeschwindigkeit derart gewählt wird, dass die Regelung im Aufbaufrequenzbereich erfolgt.

5. Verfahren nach einem der vorhergehenden Ansprüche, **dadurch gekennzeichnet, dass** als Regeleingangsgröße die wenigstens eine Aufbaugeschwindigkeit aus wenigstens einer vertikalen Aufbaugeschwindigkeit und/oder wenigstens eine Wank-, Nick- oder Torsions-geschwindigkeit und/oder wenigstens eine Wank-, Nick- oder Torsionswinkelgeschwindigkeit ausgewählt wird.

6. Verfahren nach einem der vorhergehenden Ansprüche, **dadurch gekennzeichnet, dass** einer Aufbaugeschwindigkeit direkt ein Steuersignal, vorzugsweise in Form einer Kennlinie, ein Konstante oder ein Kombination aus einer Kennlinie und einer Konstante zugeordnet wird.

7. Verfahren nach einem der vorhergehenden Ansprüche, **dadurch gekennzeichnet, dass** der Regler Modal regelt und dem Regler ein Modalumrechner vorgeschaltet ist, welcher dazu eingerichtet ist, vertikale Aufbaugeschwindigkeiten (vAvl, vAvr, vAhl, vAhr) an den Aufbauecken in Wank- und Nickgeschwindigkeiten (vWank, vNick) des Fahrzeugs umzurechnen und die so berechneten Geschwindigkeiten den Eingängen des Reglers zur Verfügung zu stellen.

8. Verfahren nach einem der vorhergehenden Ansprüche, **dadurch gekennzeichnet, dass** als Ausgangsgrößen y (i, iERvl/vr/hl/hr, iWankvl/vr/hl/hr, iNickvl/vr/hl/hr) der Regler (119, 122, 134) Signale abgibt, welche dem zum Einstellen der Aktuatoren notwendigen Strom i entsprechen, wobei das wenigstens eine Steuersignal (i, iERvl/vr/hl/hr, iWankvl/vr/hl/hr, iNickvl/vr/hl/hr) des Reglers (119, 122, 134) durch einen Strom gebildet ist, der unmittelbar beziehungsweise in proportional verstärkter oder abgeschwächter Form den Eingängen einer Ventilspule des Aktuators zugeführt wird.

9. Verfahren nach einem der vorhergehenden Ansprüche, **dadurch gekennzeichnet, dass** das wenigstens eine Steuersignal (i, iERvl/vr/hl/hr) des Reglers (119, 134) einen für die Minimierung der Aufbaugeschwindigkeit des Aufbaus über die Dämpfer an den Aufbauecken benötigten Strom entspricht.

10. Verfahren nach einem der vorhergehenden Ansprüche, **dadurch gekennzeichnet, dass** der Regler (122) an seinem Ausgang den zur Minimierung von Wank- und Nickkräften benötigten Strömen entsprechende Signale (iWankvl/vr/hl/hr, iNickvl/vr/hl/hr) zur Verfügung stellt, welche bevorzugt über an den Ecken des Fahrzeugaufbaus (20) angeordnete Dämpfer wirksam sind.

11. Verfahren nach einem der vorhergehenden Ansprüche, **dadurch gekennzeichnet, dass** vor den Eingang des Reglers (122) beziehungsweise zwischen einem Modalumrechner (120) und dem Regler (122) ein Korrekturglied (121) geschaltet ist, welches über vom Fahrzeugzustand und/oder Fahrerverhalten abhängige Korrektursignale (Fahr, Bel, Str, Akt) die Eingangssignale (vAvl/vr/hl/hr, vWank, vNick) des Reglers (119, 122) beziehungsweise die Ausgangssignale (vWank, vNick) des Modalumrechners (120) korrigiert und die korrigierten Aufbaugeschwindigkeiten (vA*vl/vr/hl/hr) beziehungsweise Wank- und Nickgeschwindigkeiten (v*Wank, v*Nick) den Eingängen des Reglers zur Verfügung stellt.

12. System zur Beeinflussung der Bewegung eines in seinen Bewegungsabläufen steuerbaren oder regelbaren Fahrzeugaufbaus eines Kraftfahrzeuges, mit Sensoren, welche die Bewegung des Fahrzeugaufbaus erfassen, mit steuerbaren oder regelbaren Aktuatoren (22, 24, 26, 28), insbesondere semi-aktiven oder aktiven Dämpfern, die zwischen dem Fahrzeugaufbau und den Fahrzeugrädern angeordnet sind, mit einem Dämpferregler (119, 122, 134), mittels der die Sensorsignale verarbeitet werden und wenigstens ein Ansteuersignal für die Aktuatoren bereitgestellt wird, wobei der Dämpferregler Regelungsmodule umfasst, mittels denen aus den Sensorsignalen wenigstens eine Aufbaugeschwindigkeit an wenigstens einem Punkt des Fahrzeugaufbaus ermittelbar ist und wenigstens ein Steuersignal für die Aktuatoren generierbar ist, wobei das wenigstens eine Steuersignal ein direkt die Aktuatoren beeinflussender Steuerstrom ist, **gekennzeichnet durch** ein Korrekturglied (118, 121, 131), mittels dem die wenigstens eine Aufbaugeschwindigkeit durch die Zustandsgrößen Fahrzustand, Beladungszustand, Straßenzustand und Fahreraktivität korrigierbar ist.

13. Fahrzeug, insbesondere Kraftfahrzeug, mit einem System zur Beeinflussung der Bewegung eines in seinen Bewegungsabläufen steuerbaren oder regelbaren Fahrzeugaufbaus nach Anspruch 12.

## Claims

1. Method for generating signals for influencing the movement of a vehicle body of a motor vehicle, the movement sequences of which vehicle body can be controlled or regulated, wherein the movement of the vehicle body is determined using sensors, the sensor signals corresponding to the determined sensor values are supplied to a damper regulator (119, 122, 134), and the damper regulator provides at least one control signal for actuating actuators (22, 24, 26, 28), in particular semiactive or active dampers, which can be used to influence the movement of the vehicle body, wherein the damper regulator is used to determine at least one body speed at at least one point of the vehicle body from the sensor signals as an input variable for regulation (regulation input variable) and the at least one control signal for actuating the actuators is determined from the at least one body speed by means of regulation algorithms, wherein a control current which directly influences the actuators is provided as the at least one control signal, **characterized in that** the driving state (longitudinal and transverse dynamics), loading state, road condition and driver activity (accelerator, brake, steering, shift stage) are used as further input variables to correct the at least one body speed.

2. Method according to Claim 1, **characterized in that** these further input variables are used as corrections for the input variables in the form of multipliers or the like.

3. Method according to one of the preceding claims, **characterized in that** the further input variables are used as corrections for one or more body speeds.

4. Method according to one of the preceding claims, **characterized in that** the at least one body speed is selected as the regulation input variable in such a manner that the regulation is carried out in the body frequency range.

5. Method according to one of the preceding claims, **characterized in that** the at least one body speed is selected from at least one vertical body speed and/or at least one rolling, pitching or torsional speed and/or at least one rolling, pitching or torsional angular velocity as the regulation input variable.

6. Method according to one of the preceding claims, **characterized in that** a control signal, preferably in the form of a characteristic curve, a constant or a combination of a characteristic curve and a constant, is directly assigned to a body speed.

7. Method according to one of the preceding claims, **characterized in that** the regulator regulates in a modal manner and a modal converter is connected upstream of the regulator and is set up to convert vertical body speeds (vAvl, vAvr, vAhl, vAhr) at the body corners into rolling and pitching speeds (vWank, vNick) of the vehicle and to make the speeds calculated in this manner available to the inputs of the regulator.

8. Method according to one of the preceding claims, **characterized in that**, as output variables y (i, iERvl/vr/hl/hr, iWankvl/vr/hl/hr, iNickvl/vr/hl/hr), the regulator (119, 122, 134) emits signals which correspond to the current i needed to adjust the actuators, wherein the at least one control signal (i, iERvl/vr/hl/hr, iWankvl/vr/hl/hr, iNickvl/vr/hl/hr) of the regulator (119, 122, 134) is formed by a current which is supplied directly or in a proportionally amplified or attenuated form to the inputs of a valve coil of the actuator.

9. Method according to one of the preceding claims, **characterized in that** the at least one control signal (i, iERvl/vr/hl/hr) of the regulator (119, 134) corresponds to a current needed to minimize the body speed of the body via the dampers at the body corners.

10. Method according to one of the preceding claims, **characterized in that** the regulator (122) provides, at its output, signals (iWankvl/vr/hl/hr, iNickvl/vr/hl/hr) which correspond to the currents needed to minimize rolling and pitching forces and are preferably effective via dampers arranged at the corners of the vehicle body (20).

11. Method according to one of the preceding claims, **characterized in that** a correcting element (121) is connected upstream of the input of the regulator (122) or between a modal converter (120) and the regulator (122) and corrects the input signals (vAvl/vr/hl/hr, vWank, vNick) of the regulator (119, 122) or the output signals (vWank, vNick) of the modal converter (120) using correction signals (Fahr, Bel, Str, Akt) dependent on the vehicle state and/or driver behaviour and makes the corrected body speeds (vA*vl/vr/hl/hr) or rolling and pitching speeds (v*Wank, v*Nick) available to the inputs of the regulator.

12. System for influencing the movement of a vehicle body of a motor vehicle, the movement sequences of which vehicle body can be controlled or regulated, having sensors which capture the movement of the vehicle body, having controllable or regulatable actuators (22, 24, 26, 28), in particular semiactive or active dampers, which are arranged between the vehicle body and the vehicle wheels, having a damper regulator (119, 122, 134) which is used to process the sensor signals and provide at least one actuation signal for the actuators, wherein the damper regulator comprises regulation modules which can be used to determine at least one body speed at at least one point of the vehicle body from the sensor signals and can be used to generate at least one control signal for the actuators, wherein the at least one control signal is a control current which directly influences the actuators, **characterized by** a correcting element (118, 121, 131) which can be used to correct the at least one body speed by means of the state variables of the driving state, loading state, road condition and driver activity.

13. Vehicle, in particular motor vehicle, having a system for influencing the movement of a vehicle body, the movement sequences of which can be controlled or regulated, according to Claim 12.

## Revendications

1. Procédé destiné à générer des signaux pour influencer le mouvement d'une carrosserie de véhicule d'un véhicule automobile, dont les séquences de mouvement peuvent être commandées ou régulées, le mouvement de la carrosserie de véhicule étant détecté par des capteurs, les signaux de capteur correspondant aux valeurs de capteur déterminées étant acheminés à un régulateur d'amortissement (119, 122, 134) et le régulateur d'amortissement fournissant au moins un signal de commande pour la commande d'actionneurs (22, 24, 26, 28), en particulier d'amortisseurs semi-actifs ou actifs, au moyen desquels le mouvement de la carrosserie du véhicule peut être influencé, au moins une vitesse de la carrosserie en tant que grandeur d'entrée pour un réglage (grandeur d'entrée de réglage) étant détectée au moyen du régulateur d'amortissement à partir des signaux de capteur au niveau d'au moins un point de la carrosserie du véhicule et au moyen d'algorithmes de réglage, l'au moins un signal de commande pour la commande des actionneurs étant déterminé à partir de l'au moins une vitesse de la carrosserie, un courant de commande influençant directement les actionneurs étant fourni en tant que l'au moins un signal de commande, **caractérisé en ce que** l'on utilise en tant que grandeurs d'entrée supplémentaires, un état de conduite (dynamique longitudinale et transversale), un état de charge, un état de la route et une activité du conducteur (accélération, freinage, direction, changement de vitesses), pour corriger l'au moins une vitesse de la carrosserie.

2. Procédé selon la revendication 1, **caractérisé en ce que** ces grandeurs d'entrée supplémentaires servent de corrections des grandeurs d'entrée sous la forme de multiplicateurs ou similaires.

3. Procédé selon l'une quelconque des revendications précédentes, **caractérisé en ce que** les grandeurs d'entrée supplémentaires servent de corrections pour une ou plusieurs vitesses de la carrosserie.

4. Procédé selon l'une quelconque des revendications précédentes, **caractérisé en ce que** l'on sélectionne, en tant que grandeur d'entrée de réglage, l'au moins une vitesse de la carrosserie de telle sorte que le réglage s'effectue dans la plage de fréquences de la carrosserie.

5. Procédé selon l'une quelconque des revendications précédentes, **caractérisé en ce que** l'on sélectionne en tant que grandeur d'entrée de réglage, l'au moins une vitesse de la carrosserie à partir d'au moins une vitesse de carrosserie verticale et/ou d'au moins une vitesse de tangage, de roulis ou de torsion et/ou d'au moins une vitesse angulaire de tangage, de roulis ou de torsion.

6. Procédé selon l'une quelconque des revendications précédentes, **caractérisé en ce qu'**à une vitesse de carrosserie est associé directement un signal de commande, de préférence sous la forme d'une courbe caractéristique, une constante, ou une combinaison d'une courbe caractéristique et d'une constante.

7. Procédé selon l'une quelconque des revendications précédentes, **caractérisé en ce que** le régulateur effectue un réglage modal et un convertisseur modal est monté en amont du régulateur, lequel est prévu pour convertir des vitesses verticales de la carrosserie (vAvl, vAvr, vAhl, vAhr) au niveau des coins de la carrosserie en des vitesses de tangage et de roulis (vWank, vNick) du véhicule et pour fournir les vitesses ainsi calculées aux entrées du régulateur.

8. Procédé selon l'une quelconque des revendications précédentes, **caractérisé en ce que** le régulateur (119, 122, 134) émet, en tant que grandeurs de départ y (i, iERvl/vr/hl/hr, iWankvl/vr/hl/hr, iNickvl/vr/hl/hr), des signaux qui correspondent au courant i nécessaire pour ajuster les actionneurs, l'au moins un signal de commande (i, iERvl/vr/hl/hr, iWankvl/vr/hl/hr, iNickvl/vr/hl/hr) du régulateur (119, 122, 134) étant formé par un courant qui est acheminé directement ou sous forme amplifiée ou affaiblie de manière proportionnelle aux entrées d'une bobine de valve de l'actionneur.

9. Procédé selon l'une quelconque des revendications précédentes, **caractérisé en ce que** l'au moins un signal de commande (i, iERvl/vr/hl/hr) du régulateur (119, 134) correspond à un courant nécessaire pour minimiser la vitesse de la carrosserie par le biais des amortisseurs au niveau des coins de la carrosserie.

10. Procédé selon l'une quelconque des revendications précédentes, **caractérisé en ce que** le régulateur (122) fournit au niveau de sa sortie des signaux (iWankvl/vr/hl/hr, iNickvl/vr/hl/hr) correspondant aux courant nécessaires pour minimiser les forces de tangage et de roulis, lesquels signaux agissent de préférence par le biais d'amortisseurs disposés au niveau des coins de la carrosserie du véhicule (20) .

11. Procédé selon l'une quelconque des revendications précédentes, **caractérisé en ce qu'**avant l'entrée du régulateur (122) ou entre un convertisseur modal (120) et le régulateur (122) est branché un organe de correction (121) qui corrige, par le biais de signaux de correction (Fahr, Bel, Str, Akt) dépendant de l'état du véhicule et/ou du comportement du conducteur, les signaux d'entrée (vAvl/vr/hl/hr, vWank, vNick) du régulateur (119, 122) ou les signaux de sortie (vWank, vNick) du convertisseur modal (120) et qui fournit les vitesses de carrosserie corrigées (vA*vl/vr/hl/hr) ou les vitesses de roulis et de tangage corrigées (v*Wank, v*Nick) aux entrées du régulateur.

12. Système pour influencer le mouvement d'une carrosserie de véhicule d'un véhicule automobile dont les séquences de mouvement peuvent être commandées et/ou régulées, comprenant des capteurs qui détectent le mouvement de la carrosserie du véhicule, avec des actionneurs pouvant être commandés ou réglés (22, 24, 26, 28), en particulier des amortisseurs semi-actifs ou actifs, qui sont disposés entre la carrosserie du véhicule et les roues du véhicule, avec un régulateur d'amortissement (119, 122, 134), au moyen duquel les signaux de capteur sont traités et au moins un signal de commande pour les actionneurs est fourni, le régulateur d'amortissement comprenant des modules de régulation au moyen desquels, à partir des signaux de capteur, au moins une vitesse de la carrosserie peut être détectée au niveau d'au moins un point de la carrosserie du véhicule, et au moins un signal de commande pour les actionneurs peut être généré, l'au moins un signal de commande étant un signal de courant influençant directement les actionneurs, **caractérisé par** un organe de correction (118, 121, 131), au moyen duquel l'au moins une vitesse de la carrosserie peut être corrigée par les grandeurs d'états constituées par l'état de conduite, l'état de charge, l'état de la route, et l'activité du conducteur.

13. Véhicule, en particulier véhicule automobile, comprenant un système pour influencer le mouvement d'une carrosserie de véhicule selon la revendication 12 dont les séquences de mouvement peuvent être commandées ou régulées.
